# EUROPEAN PATENT APPLICATION

(11) **EP 3 763 512 A1**
(43) Date of publication of application: **13.01.2021**
(21) Application number: 18909151.5
(22) Date of filing: 08.03.2018
(51) Int. Cl.: B29C 64/386, B22F 3/16, B33Y 50/00, G01N 15/02

(54) **POWDER MATERIAL EVALUATION DEVICE, POWDER MATERIAL EVALUATION METHOD, AND POWDER MATERIAL EVALUATION PROGRAM**

(71) Applicant: Technology Research Association For Future Additive Manufacturing, Chuo-ku, Tokyo 103-0027 (JP)
(72) Inventor: YAMAZAKI Noriko, Yokohama-shi, Kanagawa 220-8401 (JP); WATARI Noriko, Yokohama-shi, Kanagawa 220-8401 (JP); OGURA Yuzuru, Sagamihara-shi, Kanagawa 252-5293 (JP); WATANABE Toshiya, Nagoya-shi, Aichi 453-8515 (JP)
(74) Representative: Betten & Resch
(86) International application number: PCT/JP2018/009108
(87) International publication number: WO 2019/171559

(57) **Abstract**

A powder material as the raw material of a three-dimensional laminated and shaped object is accurately evaluated. This invention provides an evaluation apparatus of a powder material as a raw material of a three-dimensional laminated and shaped object, including a calculator that calculates, using powder constitution data concerning particles constituting the powder material, a volume of a closed space formed by the plurality of particles in the powder material, and an evaluator that evaluates the powder material by comparing the volume of the closed space calculated by the calculator with a predetermined threshold.

## Description

### TECHNICAL FIELD

The present invention relates to a powder material evaluation apparatus, a powder material evaluation method, and a powder material evaluation program.

### BACKGROUND ART

In the above technical field, patent literature 1 discloses a technique for a granular composite, as an accumulation of constituent particles, with an enhanced density.

### CITATION LIST

### PATENT LITERATURE

Patent literature 1: Japanese PCT National Publication No. 2016-535169

### SUMMARY OF THE INVENTION

### TECHNICAL PROBLEM

In the technique described in the above literature, however, since only enhancement of the density of the granular composite constituting a composition is used as the evaluation criterion of the granular composite, it is impossible to accurately evaluate a powder material as the raw material of a three-dimensional laminated and shaped object.

The present invention provides a technique of solving the above-described problem.

### SOLUTION TO PROBLEM

One example aspect of the present invention provides an evaluation apparatus of a powder material as a raw material of a three-dimensional laminated and shaped object, comprising:
a calculator that calculates, using powder constitution data concerning particles constituting the powder material, a volume of a closed space formed by the plurality of particles in the powder material; and
an evaluator that evaluates the powder material by comparing the calculated volume of the closed space with a predetermined threshold.

Another example aspect of the present invention provides an evaluation method of a powder material as a raw material of a three-dimensional laminated and shaped object, comprising:
calculating, using powder constitution data concerning particles constituting the powder material, a volume of a closed space formed by the plurality of particles in the powder material; and
evaluating the powder material by comparing the calculated volume of the closed space with a predetermined threshold.

Still other example aspect of the present invention provides an evaluation program, of a powder material as a raw material of a three-dimensional laminated and shaped object, for causing a computer to execute a method, comprising:
calculating, using powder constitution data concerning particles constituting the powder material, a volume of a closed space formed by the plurality of particles in the powder material; and
evaluating the powder material by comparing the calculated volume of the closed space with a predetermined threshold.

### ADVANTAGEOUS EFFECTS OF INVENTION

According to the present invention, it is possible to accurately evaluate a powder material as the raw material of a three-dimensional laminated and shaped object.

### BRIEF DESCRIPTION OF DRAWINGS

Fig. 1 is a block diagram showing the arrangement of a powder material evaluation apparatus according to the first example embodiment of the present invention;
Fig. 2 is a block diagram showing the arrangement of a powder material evaluation apparatus according to the second example embodiment of the present invention;
Fig. 3 is a flowchart illustrating the processing procedure of the powder material evaluation apparatus according to the second example embodiment of the present invention;
Fig. 4 is a graph showing an example of powder constitution data concerning particles constituting a powder material used by a calculator of the powder material evaluation apparatus according to the second example embodiment of the present invention;
Fig. 5 is a model view showing a plurality of particles constituting a powder material and tetrahedrons each including a closed space formed by the plurality of particles;
Fig. 6 is a view showing the relationship between a closed space and a tetrahedron obtained by Delaunay division performed by the calculator of the powder material evaluation apparatus according to the second example embodiment of the present invention;
Fig. 7 is a graph showing the distribution of a closed space void diameter converted from the volume of the closed space calculated by the calculator of the powder material evaluation apparatus according to the second example embodiment of the present invention;
Fig. 8 is a table showing an example of a predetermined threshold used by an evaluator of the powder material evaluation apparatus according to the second example embodiment of the present invention;
Fig. 9 is a model view showing examples of closed spaces each formed by a plurality of particles constituting a powder material;
Fig. 10 is a model view showing a state in which closed spaces each formed by a plurality of particles constituting a powder material change;
Fig. 11 is an explanatory view showing an example of a display unit of the powder material evaluation apparatus according to the second example embodiment of the present invention;
Fig. 12 is a block diagram showing the arrangement of a powder material evaluation apparatus according to the third example embodiment of the present invention; and
Fig. 13 is a model view showing the relationship between a virtual sphere whose volume is equal to that of a closed space and an inscribed sphere inscribed in a tetrahedron set by a closed space determiner of the powder material evaluation apparatus according to the third example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

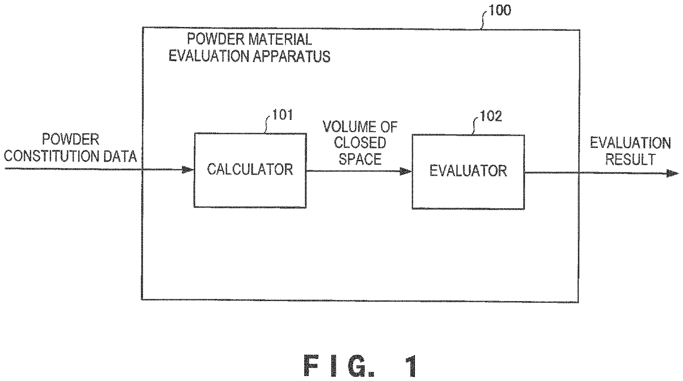

A powder material evaluation apparatus according to this example embodiment will be described with reference to Fig. 1. Fig. 1 is a block diagram showing the arrangement of the powder material evaluation apparatus according to this example embodiment. A powder material evaluation apparatus 100 according to this example embodiment is an apparatus that evaluates a powder material as the raw material of a three-dimensional laminated and shaped object.

A powder material as an evaluation target of the powder material evaluation apparatus 100 according to this example embodiment is not particularly limited as long as the powder material is a material as the raw material of a three-dimensional laminated and shaped object. Examples of the powder material can be a metal powder material, a ceramic powder material, and a plastic powder material. Examples of the metal powder material can be iron, titanium, copper, stainless steel, maraging steel, aluminum, cobalt, chromium, cobalt-chrome, nickel alloy, and inconel. Examples of the ceramic powder material can be glass fiber and gypsum. Examples of the plastic powder material can be nylon, polyamide, ABS resin, PLA resin, an epoxy-based resin, and an acrylic resin. The powder material as an evaluation target of the powder material evaluation apparatus 100 according to this example embodiment may be a material obtained by mixing the above-described powder materials appropriately.

A three-dimensional laminated and shaped object is manufactured using a powder material as the raw material. A shaping method adopted by a three-dimensional laminating and shaping apparatus used to manufacture a three-dimensional laminated and shaped object is not particularly limited. Examples of the shaping method adopted by the three-dimensional laminating and shaping apparatus can be a laser sintering method, fused deposition modeling, an optical shaping method, a direct metal laser sintering method, a laser fusion method, an electron beam melting method, direct metal lamination, and laser engineered net shaping.

As shown in Fig. 1, the powder material evaluation apparatus 100 according to this example embodiment includes a calculator 101 that calculates the volume of a closed space formed by a plurality of particles constituting the powder material, and an evaluator 102 that evaluates the powder material by comparing the calculated volume of the closed space with a predetermined threshold.

Using powder constitution data concerning particles constituting the powder material, the calculator 101 calculates the volume of the closed spaced formed by the plurality of particles in the powder material. The calculator 101 acquires the powder constitution data concerning the particles constituting the powder material as the raw material of a three-dimensional laminated and shaped object. The powder constitution data includes at least the particle sizes (µm) of the particles constituting the powder material, the particle size distribution (volume percentage (%)) of the particles, and position data of the particles. The position data of the particles are displayed in, for example, coordinate axes of (x, y, z).

The calculator 101 calculates the volume of the closed space formed by the plurality of particles using the powder constitution data concerning the particles constituting the powder material. Note that in the powder material, the closed space indicates an isolated three-dimensional space formed by the plurality of particles constituting the powder material.

The calculator 101 calculates the volume of the closed space formed by the plurality of particles constituting the powder material by executing a simulation. The simulation executed by the calculator 101 may be based on, for example, a method that reproduces a wall stress model using a discrete element method (to be referred to as "DEM" hereinafter) or the DEM and a signed distance function (to be referred to as "SDF" hereinafter) as a numerical simulation within an arbitrary wall surface shape.

The simulation executed by the calculator 101 may be based on DEM-CFD obtained by combining the DEM and computational fluid dynamics (to be referred to as "CFD" hereinafter). Furthermore, in the simulation executed by the calculator 101, a friction coefficient obtained from the angle of repose (one of the physical property values of the powder particles) of the particles included in the powder material may be used for the discrete element method (DEM). The calculator 101 may also calculate the volume of the closed space formed by the plurality of particles constituting the powder material using, as the powder constitution data concerning the particles constituting the powder material, stereolithography data (STL data) obtained by X-ray CT. The calculator 101 sets an equal-interval orthogonal grid including the powder material. The calculator 101 evaluates the volume of the closed space using the number of grid points of the equal-interval orthogonal grid belonging to a cluster formed by the plurality of particles constituting the powder material.

The volume of the closed space calculated by the calculator 101 is output to the evaluator 102 to be compared with the predetermined threshold. The predetermined threshold indicates the volume of a closed space formed from the plurality of particles constituting the powder material. The evaluator 102 compares the volume of the closed space calculated by the calculator 101 with the predetermined threshold. The predetermined threshold is set in association with the quality of an already manufactured three-dimensional laminated and shaped object. The evaluator 102 obtains a comparison result by comparing the volume of the closed space calculated by the calculator 101 with the predetermined threshold. The evaluator 102 evaluates the powder material based on the comparison result.

As described above, the powder material evaluation apparatus 100 according to this example embodiment newly defines a closed space formed by the plurality of particles constituting the powder material, and calculates the volume of the closed space using the powder constitution data concerning the particles. Then, the powder material evaluation apparatus 100 according to this example embodiment can compare the calculated volume of the closed space with the predetermined threshold, and evaluate the powder material as the raw material of the three-dimensional laminated and shaped object based on a comparison result.

### [Second Example Embodiment]

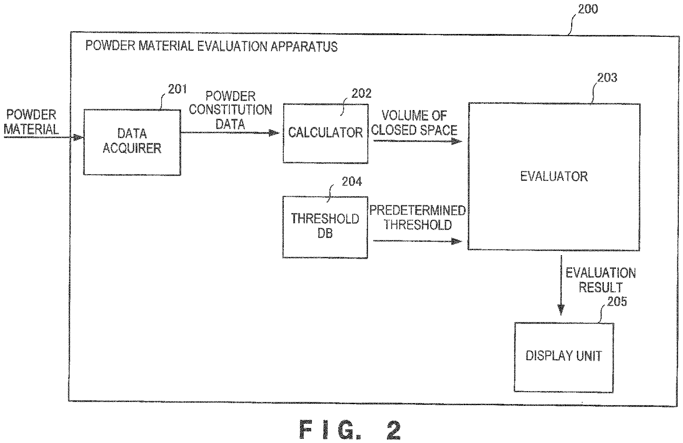

A powder material evaluation apparatus 200 according to the second example embodiment of the present invention will be described next with reference to Fig. 2. Fig. 2 is a block diagram showing the arrangement of the powder material evaluation apparatus according to the second example embodiment of the present invention. As shown in Fig. 2, the powder material evaluation apparatus 200 according to this example embodiment includes a data acquirer 201, a calculator 202, an evaluator 203, a threshold DB 204, and a display unit 205.

The data acquirer 201 acquires powder constitution data concerning particles constituting a powder material. The data acquirer 201 outputs the powder constitution data to the calculator 202. The calculator 202 calculates the volume of a closed space formed by a plurality of particles constituting the powder material using the powder constitution data acquired from the data acquirer 201. The calculator 202 outputs the calculated volume of the closed space to the evaluator 203.

The threshold DB 204 stores a predetermined threshold. The predetermined threshold is based on each data of an already manufactured three-dimensional laminated and shaped object. The predetermined threshold stored in the threshold DB 204 is output to the evaluator 203. The calculator 202 compares the calculated volume of the closed space with the predetermined threshold output from the threshold DB 204. The calculator 202 outputs, as a comparison result, to the evaluator 203, a result of comparing the calculated volume of the closed space with the predetermined threshold output from the threshold DB 204. The evaluator 203 acquires the evaluation result of the powder material by determining the comparison result. The evaluator 203 outputs the evaluation result to the display unit 205. The display unit 205 displays the evaluation result of the powder material as an evaluation target.

The plurality of particles constituting the powder material have different shapes and particle sizes, and are randomly located in the powder material. The powder material has a predetermined particle size distribution (volume percentage (%)). Therefore, it is extremely difficult to calculate the volume of the closed space formed from the plurality of particles constituting the powder material. To cope with this, the powder material evaluation apparatus 200 according to this example embodiment includes the calculator 202 to readily calculate the volume of the closed space formed from the plurality of particles constituting the powder material.

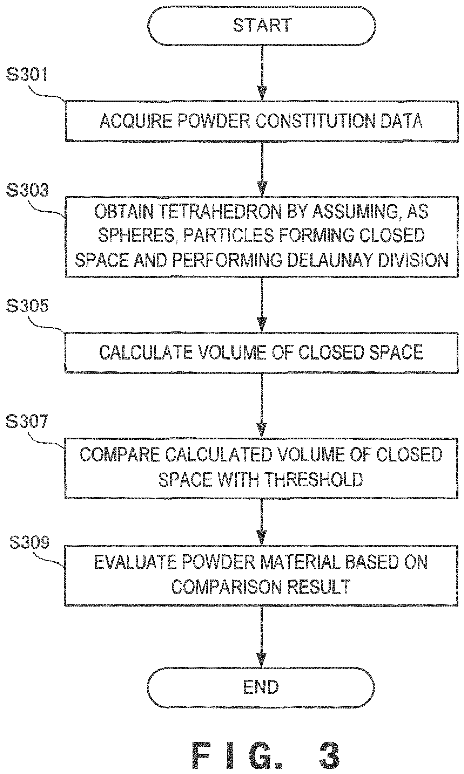

Fig. 3 is a flowchart illustrating the processing procedure of the powder material evaluation apparatus 200 according to the second example embodiment of the present invention. In step S301, the calculator 202 acquires, from the data acquirer 201, the powder constitution data concerning the particles constituting the powder material as the raw material of a three-dimensional laminated and shaped object. The powder constitution data includes at least the particle sizes (µm) of the particles constituting the powder material, the particle size distribution (volume percentage (%)) of the particles, and position information of the particles. Furthermore, the powder constitution data may include the thermal conductivity of each particle, the surface friction coefficient of each particle, the sphericity of each particle, and the number of contact points at which each particle contacts another particle.

In step S303, the calculator 202 assumes, as spheres, particles constituting the powder material and forming a closed space. The calculator 202 performs Delaunay division by setting the centers of the four spheres as base points(generatrices), thereby obtaining a tetrahedron.

In step S305, the calculator 202 calculates the volume of the tetrahedron. The calculator 202 calculates the volume of an overlapping portion of the tetrahedron and the spheres existing at the four vertices of the tetrahedron. The calculator 202 calculates, as the volume of the closed space, a volume obtained by subtracting the volume of the overlapping portion from the volume of the tetrahedron.

In step S307, the evaluator 203 compares the volume of the closed space calculated by the calculator 202 in step S305 with the predetermined threshold stored in the threshold DB 204. The predetermined threshold stored in the threshold DB 204 is set in association with the quality of an already manufactured three-dimensional laminated and shaped object under a given condition.

The evaluator 203 outputs a comparison result by comparing the volume of the closed space calculated by the calculator 202 with the predetermined threshold stored in the threshold DB 204.

The predetermined threshold stored in the threshold DB 204 may be set to include a plurality of thresholds. If the predetermined threshold is set to include the plurality of thresholds, the plurality of thresholds are set in association with the qualities of a plurality of already manufactured three-dimensional laminated and shaped objects.

A method executed by the evaluator 203 to acquire a comparison result is not particularly limited. A ratio or difference between the volume of the closed space calculated by the calculator 202 and the predetermined threshold stored in the threshold DB 204 may be obtained to acquire a comparison result.

In step S309, the evaluator 203 evaluates the powder material by determining the comparison result. The evaluator 203 has an evaluation criterion to determine the comparison result obtained in step S307. The evaluator 203 determines the comparison result by collating the comparison result with the evaluation criterion. Based on the comparison result, the evaluator 203 estimates the quality of a three-dimensional laminated and shaped object to be manufactured from the powder material as an evaluation target, thereby evaluating the powder material.

As described above, in the processing procedure of the powder material evaluation apparatus 200, the volume of the closed space formed from the plurality of particles is calculated based on the powder constitution data, and is compared with the predetermined threshold, thereby evaluating the powder material.

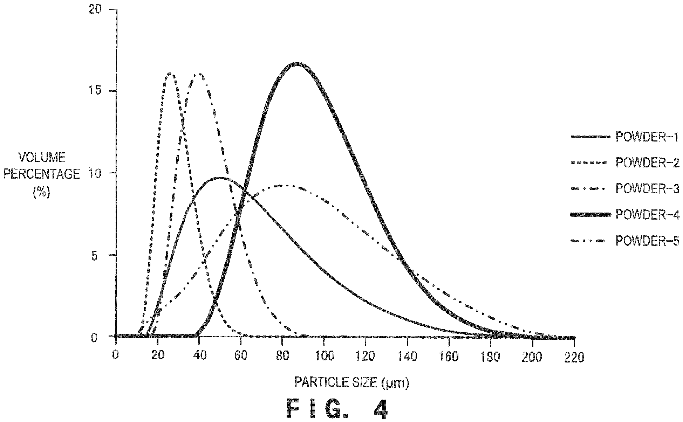

Fig. 4 is a graph showing an example of the powder constitution data used, in step S301, by the calculator to calculate the volume of the close space. As shown in Fig. 4, a plurality of particles contained in each of powder materials (represented by powders 1 to 5) have specific particle sizes (µm) within a range of 1 to 200 µm. The particles having given particle sizes constituting each of the powder materials (represented by powders 1 to 5) are distributed (to be referred to as a "particle size distribution" hereinafter) at a given volume ratio (volume percentage (%)) with respect to the whole volume (total amount) of the powder material. That is, the powder material as the raw material of a three-dimensional laminated and shaped object is a composite of a plurality of particles in which particles (µm) having given particle sizes exist at a predetermined volume percentage (%).

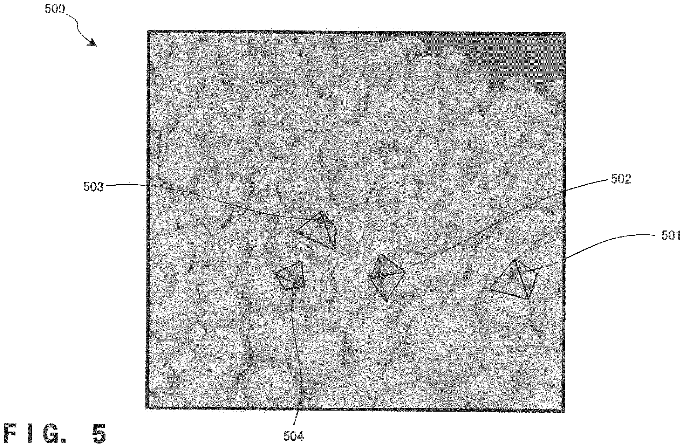

Fig. 5 is a model view showing a plurality of particles constituting a powder material and tetrahedrons each including a closed space formed by the plurality of particles. As shown in Fig. 5, a plurality of particles constituting a powder material 500 have different particle sizes and are randomly located in the powder material 500. The plurality of particles constituting the powder material 500 form a closed space. Tetrahedrons 501 to 504 are formed by connecting the centers of the plurality of particles constituting the powder material and forming the respective closed spaces. Each of the tetrahedrons 501 to 504 includes the closed space formed from the plurality of particles constituting the powder material.

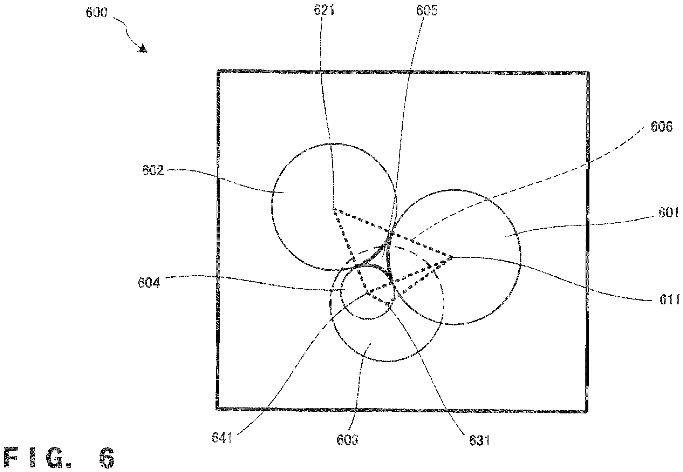

Fig. 6 is a view showing the relationship between a tetrahedron obtained in step S303 by performing Delaunay division by the calculator 202 and a closed space formed from the particles constituting the powder material. As shown in Fig. 6, the calculator 202 assumes, as spheres, all particles 601 to 604 forming one closed space. The calculator 202 sets, as points 611, 621, 631, and 641, the centers of the particles 601 to 604 assumed as the spheres. The calculator 202 performs Delaunay division using, as base points, the points 611, 621, 631, and 641 set as the centers of the spheres, thereby obtaining a tetrahedron 606 obtained by the Delaunay division.

As shown in Fig. 6, in step S305, the calculator 202 calculates the volume of the tetrahedron 606. The calculator 202 calculates the volume of an overlapping portion of the tetrahedron and the spheres existing at the four vertices 611, 621, 631, and 641 of the tetrahedron 606. Then, the calculator 202 calculates the volume of a closed space 605 by subtracting the volume of the overlapping portion from the volume of the tetrahedron 606. As described above, the powder material evaluation apparatus 200 according to this example embodiment can readily calculate the volume of the closed space formed from the plurality of particles constituting the powder material.

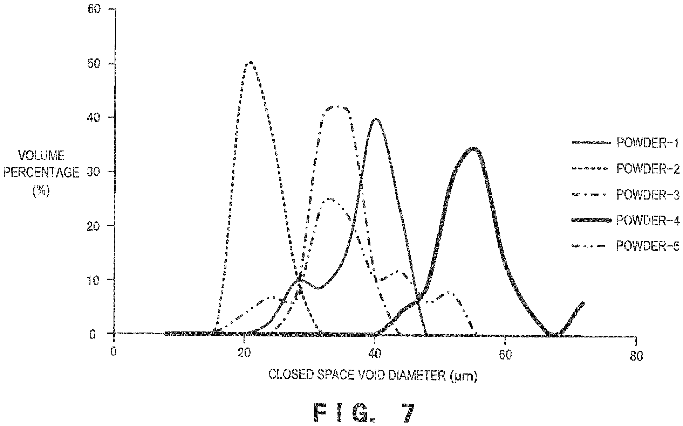

Fig. 7 is a graph showing an example of the distribution of a closed space void diameter (µm) converted from the volume of the closed space calculated by the calculator 202 in step S305. Referring to Fig. 7, it is understood that a closed space formed from the plurality of particles constituting each of the powder materials (represented by powders 1 to 5) has a closed space void diameter (µm) corresponding to the volume of the closed space.

In each of the powder materials (represented by powders 1 to 5), closed spaces with predetermined volumes each formed from a plurality of particles are distributed at a predetermined volume ratio (volume percentage) with respect to the whole volume (total amount) of the closed space formed from the particles constituting the powder material. In each of the powder materials (represented by powders 1 to 5), the ratio (%) of the volume of each closed space formed from the plurality of particles constituting the powder material to the whole volume (total amount) of the closed space formed from the particles constituting the powder material is as follows. The ratio is 0.17 for powder 1, 0.27 for powder 2, 0.18 for powder 3, 1.23 for powder 4, or 0.91 for powder 5.

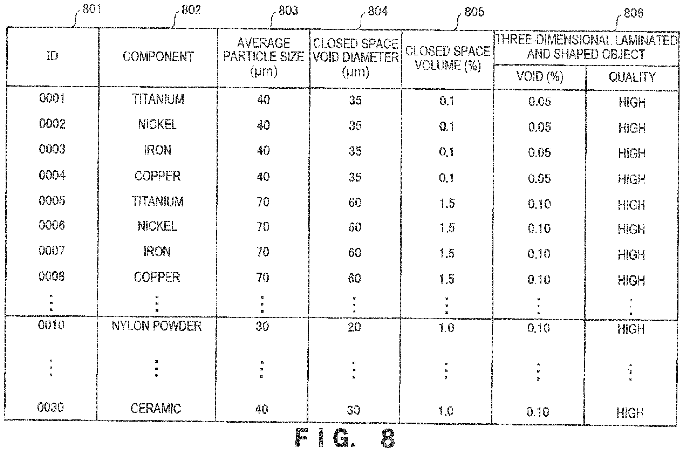

Fig. 8 is a table showing an example of the predetermined threshold used by the evaluator 203 in step S307. As shown in Fig. 8, data 800 included in the predetermined threshold is formed from respective data of already manufactured three-dimensional laminated and manufactured objects. Note that the data 800 is based on respective data of several tens of thousands or more of already manufactured three-dimensional laminated and manufactured objects, and is protected as so-called know-how. The data 800 includes, for example, a powder material ID 801, a component 802 of a powder material, an average particle size 803 of particles of the powder material, a closed space void diameter 804, a closed space volume 805, and quality 806 of a three-dimensional laminated and shaped object.

A powder material with the powder material ID 801 of 0001 is constituted from particles of a metal titanium powder material. The average particle size of the particles of the powder material is 40 µm. The closed space void diameter formed by the plurality of particles constituting the powder material is 35 µm. The ratio of the volume of the closed space formed from the plurality of particles constituting the powder material to the whole volume (total amount) of the space formed from the particles constituting the powder material is 0.10 (%).

The ratio of the volume of a void existing in a three-dimensional laminated and shaped object manufactured using the above powder material to the whole volume of the three-dimensional laminated and shaped object is 0.05 (%). The quality of the three-dimensional laminated and shaped object is high.

Fig. 8 also shows data when a powder material (nano-ion powder) with the powder material ID 801 of "0010" is adopted and data when a powder material (ceramic) with the powder material ID 801 of "0030" is adopted.

As described above, the predetermined threshold stored in the threshold DB 204 is set in association with the quality of the already manufactured three-dimensional laminated and shaped object under a given condition. The evaluator 203 acquires a comparison result by comparing the volume of the closed space calculated by the calculator 202 with the predetermined threshold. Furthermore, the evaluator 203 evaluates the powder material by determining the comparison result.

The powder material evaluation apparatus according to this example embodiment evaluates the powder material by determining the comparison result acquired by comparing the volume of the closed space calculated by the calculator 202 with the predetermined threshold. As described above, the technical feature of the powder material evaluation apparatus according to this example embodiment is that the volume of the closed space is calculated by newly defining a closed space formed by particles of the powder material.

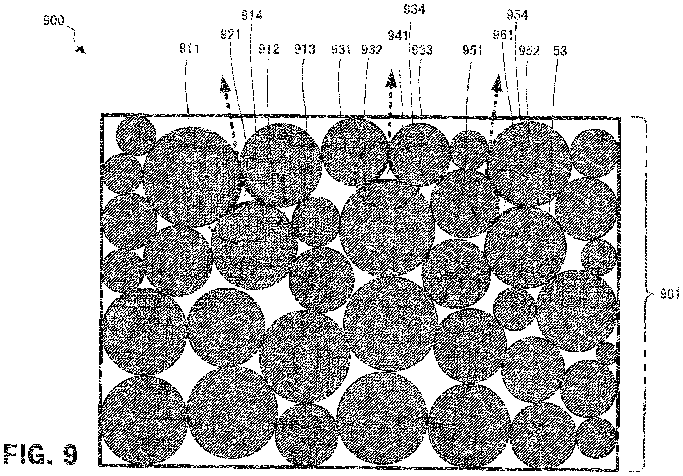

A method of forming a closed space by a plurality of particles constituting a powder material and the influence of the existence of the closed space on a three-dimensional laminated and shaped object will be described below. Fig. 9 is a model view showing examples of closed spaces each formed, in a powder material, by a plurality of particles of the powder material.

In the powder material, closed spaces exist independent of each other, and are formed when a plurality of particles 901 constituting the powder material contact each other.

As shown in Fig. 9, a closed space 921 is formed from particles 911, 912, 913, and 914 of the powder material. Similarly, a closed space 941 is formed from particles 931, 932, 933, and 934 of the powder material, and a closed space 961 is formed from particles 951, 952, 953, and 954 of the powder material. These closed spaces are spaces each surrounded by the plurality of particles 901 in a powder material 900.

A gas existing in the system of the powder material 900 is trapped in each of these closed spaces. The gas trapped in each closed space is emitted outside the closed space only by a buoyant force (three-dimensional force). Thus, it takes time for the gas trapped in each closed space to be emitted within the system of the powder material 900. As a result, the gas trapped in each closed space is hardly emitted outside the system of the powder material 900.

The gas trapped in each closed space is held intact in the system of the powder material 900 without being emitted outside the system of the powder material 900 in manufacturing steps of a three-dimensional laminated and shaped object. After completion of all the manufacturing steps of the three-dimensional laminated and shaped object, the gas trapped in each closed space remains intact in the three-dimensional laminated and shaped object.

Finally, a void in which the gas trapped in each closed space exists is formed in the three-dimensional laminated and shaped object. In each void existing in the three-dimensional laminated and shaped object, there is no raw material of the three-dimensional laminated and shaped object. Therefore, each void existing in the three-dimensional laminated and shaped object degrades the physical properties of the manufactured three-dimensional laminated and shaped object, resulting in a decrease in quality of the three-dimensional laminated and shaped object.

On the other hand, in the powder material 900, there also exists a space (to be referred to as an "open space" hereinafter) formed by the plurality of particles 901 and communicating with the outside of the system of the powder material 900. In the powder material 900, a surface tension acting on a fluid formed when particles with particles sizes of about 100 µm of the powder material dissolve is 1,000 times or larger than the gravity acting on the fluid. Thus, a gas existing in the open space is readily emitted outside the system of the powder material 900 by a one-dimensional force. Finally, in the powder material 900, the gas existing in the open space does not remain in the powder material 900. As described above, the open space formed by the plurality of particles 901 constituting the powder material 900 does not become a void existing in the manufactured three-dimensional laminated and shaped object. That is, the open space formed by the plurality of particles 901 constituting the powder material does not influence degradation in quality of the three-dimensional laminated and shaped object.

The volume of the open space and the volume of each closed space formed by the plurality of particles 901 constituting the powder material have a predetermined relationship. In the powder material 900, the volume of the open space formed by the plurality of particles 901 is obtained by subtracting the volumes of the closed spaces from the volume of the entire space formed by the plurality of particles 901.

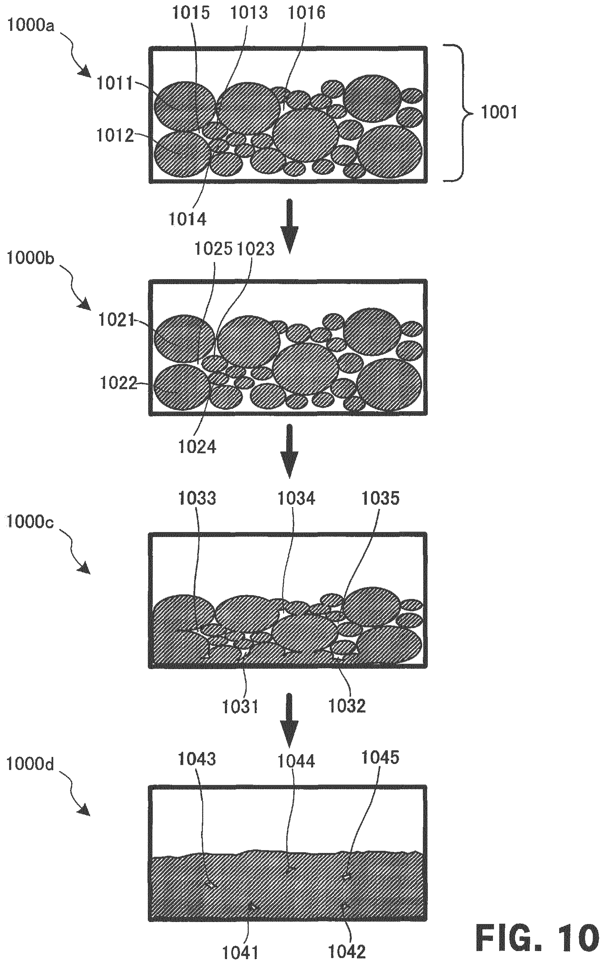

Fig. 10 is a model view showing a state in which closed spaces each formed by a plurality of particles constituting a powder material change. As shown in Fig. 10, the states of the closed spaces each formed by the plurality of particles constituting the powder material change in order of 1000a to 1000d when the particles constituting the material powder dissolve. The state 1000a indicates the state of the powder material immediately before a three-dimensional laminating and shaping apparatus emits, for example, a laser beam.

The powder material is constituted from a plurality of powder material particles 1001. For example, in an upper left portion in the state 1000a, particles 101 1 and 1012 of the powder material are located from above to below. The particles 1011 and 1012 contact each other via particles 1013 and 1014. These four particles form a closed space 1015. The powder material includes a plurality of closed spaces such as the closed space 1015 and a closed space 1016 each formed from the plurality of particles.

Next, if the powder material in the state 1000a is irradiated with a laser beam or the like by the three-dimensional laminating and shaping apparatus, the particles constituting the powder material dissolve, thereby shifting to the state 1000b. The state 1000b includes a plurality of closed spaces such as a closed space 1025 formed from particles 1021, 1022, 1023, and 1024.

If the powder material in the state 1000b is irradiated with a laser beam or the like by the three-dimensional laminating and shaping apparatus, the particles constituting the powder material dissolve, thereby shifting to the state 1000c. The powder material in the state 1000c includes closed spaces 1031, 1032, 1033, 1034, and 1035.

Finally, if the powder material in the state 1000c is irradiated with a laser beam or the like by the three-dimensional laminating and shaping apparatus, the particles of the powder material dissolve, thereby shifting to the state 1000d. In the state 1000d, the powder material is cooled and solidified, thereby obtaining a three-dimensional laminated and shaped object as a final product.

There exist closed spaces 1041, 1042, 1043, 1044, and 1045 in the manufactured three-dimensional laminated and shaped object. In each of these closed spaces, a gas that cannot be emitted outside the system of the powder material remains intact. As a result, voids exist in the manufactured three-dimensional laminated and shaped object. The quality of the manufactured three-dimensional laminated and shaped object is not high.

As described above, the powder material evaluation apparatus according to this example embodiment newly defines a closed space formed from the plurality of particles constituting the powder material in the powder material, and calculates the volume of the closed space. Furthermore, the powder material evaluation apparatus according to this example embodiment acquires a comparison result by comparing the volume of the closed space with the predetermined threshold, and determines the comparison result, thereby evaluating the powder material.

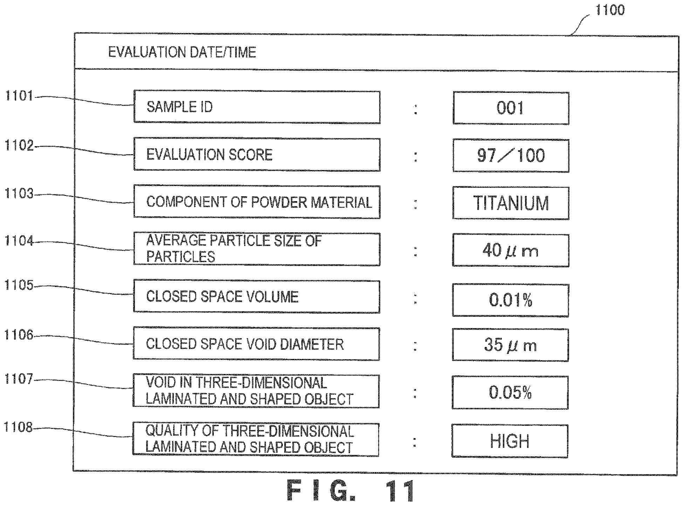

The powder material evaluation apparatus 200 according to this example embodiment includes the display unit 205 for displaying the evaluation result of the powder material. Fig. 11 is an explanatory view showing a screen 1100 as an example of a screen displayed on the display unit 205 of the powder material evaluation apparatus 200 according to this example embodiment. As shown in Fig. 11, the screen 1100 includes, for example, a sample ID 1101 of a powder material, an evaluation score 1102, a component 1103 of the powder material, an average particle size 1104 of particles constituting the powder material, a closed space volume 1105, and a closed space void diameter 1106. Furthermore, the screen 1100 includes a void 1107 existing in a three-dimensional laminated and shaped object, and quality 1108 of the three-dimensional laminated and shaped object.

### [Third Example Embodiment]

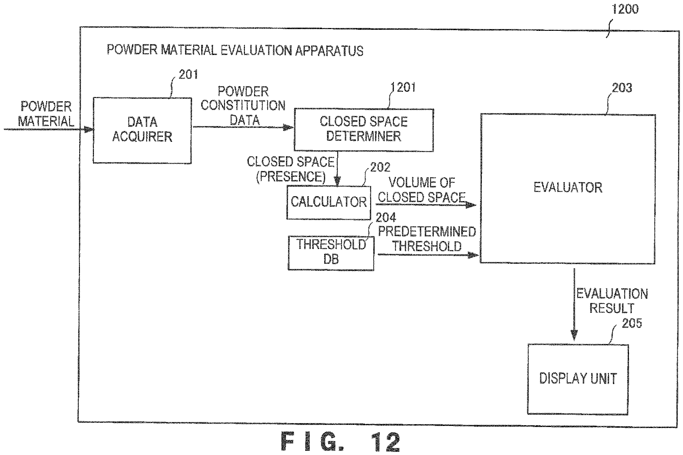

A powder material evaluation apparatus according to the third example embodiment will be described next with reference to Fig. 12. Fig. 12 is a block diagram showing the arrangement of the powder material evaluation apparatus according to this example embodiment. A powder material evaluation apparatus 1200 according to this example embodiment is different from that according to the above-described example embodiment in that a closed space determiner 1201 is provided. The remaining components and operations are similar to those in the above-described example embodiment. Hence, the same reference numerals denote similar components and operations, and a detailed description thereof will be omitted.

As shown in Fig. 12, the powder material evaluation apparatus 1200 according to this example embodiment further includes the closed space determiner 1201 for determining whether a space formed from a plurality of particles constituting a powder material is a closed space.

Particles constituting a powder material as the raw material of a three-dimensional laminated and shaped object have different particle sizes, and are randomly located in the powder material. It is, therefore, extremely difficult to determine whether a space formed by the particles constituting the powder material is a closed space in the powder material. To cope with this, the powder material evaluation apparatus 1200 according to this example embodiment includes the closed space determiner 1201 to determine whether a space formed from the plurality of particles constituting the powder material is a closed space.

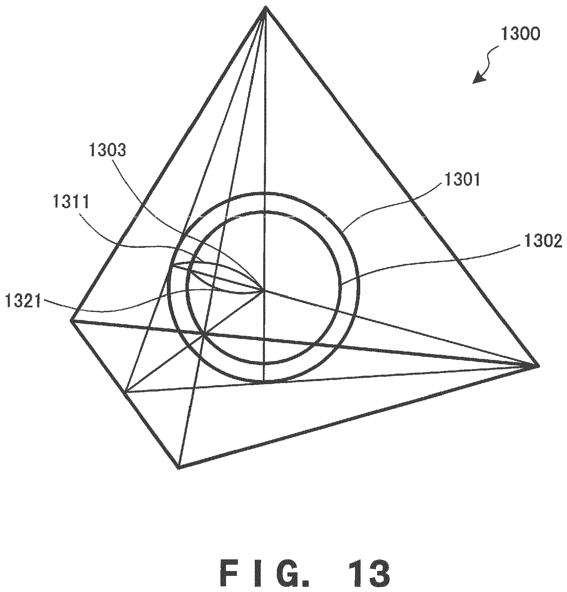

Fig. 13 is a model view showing the relationship between a virtual sphere whose volume is equal to that of a closed space and an inscribed sphere inscribed in a tetrahedron set by the closed space determiner 1201 of the powder material evaluation apparatus 1200 according to the third example embodiment of the present invention.

Similar to the above-described example embodiment, the closed space determiner 1201 assumes, as spheres, the particles constituting the powder material, and performs Delaunay division by setting the centers of the spheres as base points, thereby obtaining a tetrahedron 1300. The closed space determiner 1201 considers an inscribed sphere 1301 inscribed in the tetrahedron 1300. Furthermore, the closed space determiner 1201 calculates the volume of a space formed by the plurality of particles constituting the powder material, and considers a virtual sphere 1302 whose volume is equal to that of the space.

Next, the closed space determiner 1201 places, at a barycenter 1303 of the tetrahedron 1300, the center of the inscribed sphere 1301 inscribed in the tetrahedron 1300 and the center of the virtual sphere 1302 whose volume is equal to that of the space formed by the plurality of particles constituting the powder material.

In addition, the closed space determiner 1201 compares the size of the inscribed sphere 1301 with that of the virtual sphere 1302. The closed space determiner 1201 determines whether the virtual sphere 1302 whose volume is equal to that of the space formed by the plurality of particles is smaller than the inscribed sphere 1301 inscribed in the tetrahedron 1300. Comparison between the size of the virtual sphere 1302 and that of the inscribed sphere 1301 is implemented by comparing a radius 1321 of the virtual sphere 1302 with a radius 1311 of the inscribed sphere 1301.

If the virtual sphere 1302 whose volume is equal to that of the space formed by the plurality of particles is smaller than the inscribed sphere 1301 inscribed in the tetrahedron 1300, the closed space determiner 1201 determines the space as a closed space. On the other hand, if the virtual sphere 1302 whose volume is equal to that of the space formed by the plurality of particles is larger than the inscribed sphere 1301 inscribed in the tetrahedron 1300, the closed space determiner 1201 determines the space as an open space. If the closed space determiner 1201 determines that the space formed by the plurality of particles is a closed space, it outputs a determination result of "presence of closed space" to the calculator 202. Based on the determination result of "presence of closed space", the calculator 202 determines that the space formed from the plurality of particles constituting the powder material is a closed space, and calculates the volume of the closed space, similar to the above-described example embodiment. The evaluator 203 evaluates the powder material, similar to the above-described example embodiment.

As described above, the closed space determiner 1201 sets an inscribed sphere inscribed in a tetrahedron obtained by assuming, as spheres, particles constituting a powder material and performing Delaunay division using the centers of the spheres as base points. Then, the closed space determiner 1201 determines whether the space is a closed space by comparing the volume of the inscribed sphere with that of a virtual sphere whose volume is equal to that of the space formed from the particles constituting the powder material. That is, the powder material evaluation apparatus according to this example embodiment further includes the closed space determiner capable of determining whether the space formed from the particles contained in the powder material is a closed space, thereby making it possible to evaluate the powder material accurately and quickly.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. An evaluation apparatus of a powder material as a raw material of a three-dimensional laminated and shaped object, comprising:
a calculator that calculates, using powder constitution data concerning particles constituting the powder material, a volume of a closed space formed by the plurality of particles in the powder material; and
an evaluator that evaluates the powder material by comparing the calculated volume of the closed space with a predetermined threshold.

2. The evaluation apparatus of the powder material according to claim 1, wherein when the particles are assumed as spheres, said calculator performs Delaunay division by setting centers of the spheres as base points, and calculates the volume of the closed space by subtracting, from a volume of a tetrahedron obtained by the Delaunay division, a volume of an overlapping portion of the tetrahedron and the spheres existing at four vertices of the tetrahedron.

3. The evaluation apparatus of the powder material according to claim 2, further comprising a closed space determiner that determines a closed space when a virtual sphere whose volume is equal to that of the closed space is considered, a center of the virtual sphere is placed at a gravity of the tetrahedron, and the virtual sphere is smaller than an inscribed sphere inscribed in the tetrahedron.

4. An evaluation method of a powder material as a raw material of a three-dimensional laminated and shaped object, comprising:
calculating, using powder constitution data concerning particles constituting the powder material, a volume of a closed space formed by the plurality of particles in the powder material; and
evaluating the powder material by comparing the calculated volume of the closed space with a predetermined threshold.

5. An evaluation program, of a powder material as a raw material of a three-dimensional laminated and shaped object, for causing a computer to execute a method, comprising:
calculating, using powder constitution data concerning particles constituting the powder material, a volume of a closed space formed by the plurality of particles in the powder material; and
evaluating the powder material by comparing the calculated volume of the closed space with a predetermined threshold.
